# EUROPEAN PATENT APPLICATION

(11) **EP 4 697 571 A1**
(43) Date of publication of application: **18.02.2026**
(21) Application number: 24800114.1
(22) Date of filing: 30.04.2024
(51) Int. Cl.: H02K 9/19, H02K 1/20, H02K 5/20

(54) **ELECTRIC MOTOR**

(30) Priority: 01.05.2023 JP 2023075824
(71) Applicant: HINO MOTORS, LTD., Hino-shi, Tokyo 191-8660 (JP)
(72) Inventor: HIRANO, Satoru, Hino-shi, Tokyo 191-8660 (JP); KIMURA, Keita, Hino-shi, Tokyo 191-8660 (JP)
(74) Representative: D Young & Co LLP
(86) International application number: PCT/JP2024/016731
(87) International publication number: WO 2024/228383

(57) **Abstract**

An electric motor includes: a shaft extending along a first direction; a rotor provided on the shaft; a stator provided to surround the rotor; a bearing rotatably supporting the shaft; a housing accommodating the shaft, the rotor, the stator, and the bearing; and a coolant flow path formed in the housing and through which coolant flows, wherein the housing includes: an inner space accommodating at least the rotor; and an outer space separated from the inner space, and wherein the coolant flow path includes: a first region on a side of the one end portion of the stator in the outer space; a second region on a side of the other end portion of the stator in the outer space; and a plurality of grooves formed in an outer peripheral portion of the stator so as to extend along the first direction and communicate the first region with the second region.

## Description

### Technical Field

The present disclosure relates to an electric motor.

### Background Art

Patent Literature 1 describes an oil cooling structure for an electric vehicle motor. This oil cooling structure includes a case and a motor having a stator core fitted inside the case. Between the case and the stator core, oil grooves extending in the axial direction are formed at a plurality of positions in the circumferential direction. One end of each oil groove communicates with a first annular space formed such that the rear end face side in the axial direction of the stator core is open, and is open to the inside of the case via the first annular space.

### Citation List

### Patent Literature

[Patent Literature 1] Japanese Unexamined Patent Publication No. 2020-120556

### Summary of Invention

### Technical Problem

In the oil cooling structure described in Patent Literature 1, improvement in cooling performance of the motor is achieved by injecting oil introduced from an oil introduction port toward the coil end from many locations in the circumferential direction via the oil grooves and the first annular space.

However, in the oil cooling structure described in Patent Literature 1, oil is in a state of being dripped over the entire motor. Therefore, when oil contacts the rotor, there is a problem that agitation loss of the oil increases.

An object of the present disclosure is to provide an electric motor capable of suppressing agitation loss of coolant.

### Solution to Problem

An electric motor according to the present disclosure includes: a shaft extending along a first direction; a rotor provided on the shaft; a stator provided to surround the rotor; a bearing rotatably supporting the shaft; a housing accommodating the shaft, the rotor, the stator, and the bearing; and a coolant flow path formed in the housing and through which coolant flows, wherein the housing includes: a first wall portion against which one end portion of the stator in the first direction abuts; a second wall portion against which the other end portion of the stator in the first direction abuts; a side wall portion facing an outer peripheral portion of the stator; an inner space formed by an inner peripheral portion of the stator and the first wall portion and the second wall portion, the inner space accommodating at least the rotor; and an outer space formed by the outer peripheral portion of the stator and the first wall portion and the second wall portion, the outer space being separated from the inner space by a sealing member interposed between the one end portion of the stator and the first wall portion and between the other end portion of the stator and the second wall portion, and wherein the coolant flow path includes: a first region on a side of the one end portion of the stator in the outer space; a second region on a side of the other end portion of the stator in the outer space; and a plurality of grooves formed in the outer peripheral portion of the stator so as to extend along the first direction and communicate the first region with the second region.

In this electric motor, the housing includes: a first wall portion against which one end portion of the stator in the first direction abuts; a second wall portion against which the other end portion of the stator in the first direction abuts; a side wall portion facing an outer peripheral portion of the stator; an inner space formed by an inner peripheral portion of the stator and the first wall portion and the second wall portion, the inner space accommodating at least the rotor; and an outer space formed by the outer peripheral portion of the stator and the first wall portion and the second wall portion. The outer space is separated from the inner space by a sealing member interposed between the one end portion of the stator and the first wall portion and between the other end portion of the stator and the second wall portion. The coolant flow path through which coolant flows includes: a first region on a side of the one end portion of the stator in the outer space; a second region on a side of the other end portion of the stator in the outer space; and a plurality of grooves formed in the outer peripheral portion of the stator so as to extend along the first direction and communicate the first region with the second region. Accordingly, in the outer space of the housing, by circulating coolant from, for example, the first region to the second region via a plurality of grooves, efficient cooling becomes possible by circulating coolant around the outer peripheral portion of the stator. In particular, the outer space through which coolant flows in the housing and the inner space accommodating at least a part of the rotor and shaft are separated by the sealing member interposed between the end portions of the stator and the first wall portion and second wall portion of the housing (the outer space is sealed off from the inner space). Therefore, since coolant is prevented from being introduced into the inner space and contacting rotating bodies such as the rotor, agitation loss of the coolant is suppressed.

In the electric motor according to the present disclosure, each of the plurality of grooves may be closed in a second direction intersecting the first direction by a top portion of a projection abutting against the side wall portion of the housing, the projection being formed on the outer peripheral portion of the stator so as to define the plurality of grooves. In this case, the grooves are closed and made tubular by the top portions of the projections on the outer peripheral portion of the stator abutting against the side wall portion of the housing, allowing coolant to flow efficiently. In particular, since separate members for closing the grooves, which do not function in terms of a magnetic circuit, are unnecessary, waste in terms of mass can be suppressed.

In the electric motor according to the present disclosure, the bearing may include: a first bearing embedded in the first wall portion; and a second bearing embedded in the second wall portion, and the coolant flow path may include: a first communication passage formed inside the first wall portion so as to communicate a part of the first region with another part of the first region via the first bearing; and a second communication passage formed inside the second wall portion so as to communicate a part of the second region with another part of the second region via the second bearing. In this case, the coolant flow path includes communication passages via the bearings. Therefore, it becomes possible to cool the bearings and suppress overheating of the bearings.

### Advantageous Effects of Invention

According to the present disclosure, an electric motor capable of suppressing agitation loss of coolant can be provided.

### Brief Description of Drawings

[FIG. 1] FIG. 1 is a schematic cross-sectional view of a motor according to the present embodiment.
[FIG. 2] FIG. 2 is an enlarged cross-sectional view of region AR in FIG. 1.

### Description of Embodiments

Hereinafter, a motor according to an embodiment will be described with reference to the drawings. In the description of each figure, the same or corresponding elements are denoted by the same reference numerals, and redundant descriptions may be omitted. Each figure illustrates a coordinate system consisting of a first axis defining a first direction D1, a second axis defining a second direction D2 intersecting the first direction D1, and a third axis defining a third direction intersecting the first direction and the second direction.

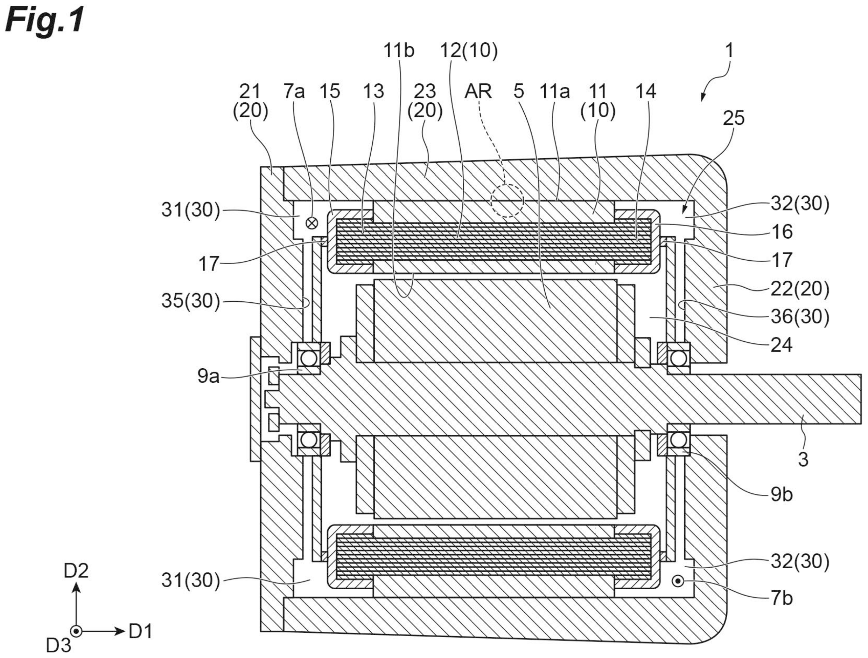

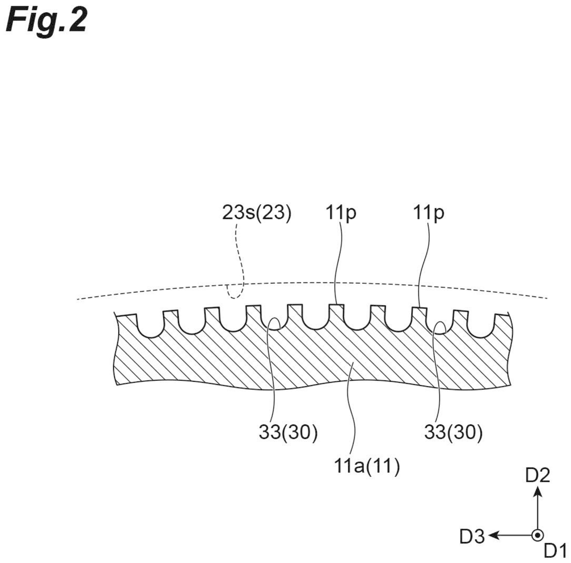

FIG. 1 is a schematic cross-sectional view of a motor according to the present embodiment. FIG. 2 is an enlarged cross-sectional view of region AR in FIG. 1. The motor 1 (electric motor) illustrated in FIGS. 1 and 2 can be mounted on, for example, electric vehicles such as hybrid electric vehicles (HEV), plug-in hybrid electric vehicles (PHEV), fuel cell electric vehicles (FCEV), and battery electric vehicles (BEV).

The motor 1 includes a shaft 3, a rotor 5, a first bearing 9a, a second bearing 9b, a stator 10, and a housing 20. The shaft 3 is a rod-shaped member extending along the first direction D1. The shaft 3 is rotatably supported around an axis along the first direction D1 by the first bearing 9a and the second bearing 9b arranged spaced apart from each other along the first direction D1. The shaft 3 is a member that transmits power to, for example, external equipment by rotating with the rotational force generated by the motor 1.

The rotor 5 is provided on the shaft 3. The rotor 5 is a cylindrical member that rotates together with the shaft 3. The rotor 5 has, for example, permanent magnets for forming a rotor magnetic field (in the case of a synchronous machine) or cage-shaped aluminum (in the case of an induction machine) arranged inside. The rotor 5 rotates around the axis along the first direction D1 in conjunction with the shaft 3 by interaction between the rotor magnetic field and a stator magnetic field formed by the stator 10.

The stator 10 is a tubular (here, cylindrical) member provided so as to surround the rotor 5 along the first direction D1. The stator 10 includes a stator core 11 and a coil 12. The stator core 11 can be configured, for example, by laminating and welding electromagnetic steel sheets. A coil 12 for forming a stator magnetic field is wound around the stator core 11.

At one end of the stator core 11 in the first direction D1, a coil end, which is a part of the coil 12, is formed and protrudes, constituting one end portion 13 of the stator 10. At the other end of the stator core 11 in the first direction D1, a coil end, which is a part of the coil 12, is formed and protrudes, constituting the other end portion 14 of the stator 10. The stator 10 can be fixed to the housing 20 by other members such as stator bolts.

The motor 1 is, for example, a three-phase AC motor. In this case, the coil 12 can be composed with a plurality of portions corresponding to each of U-phase, V-phase, and W-phase arranged along the circumferential direction of the stator 10. The second direction D2 is the radial direction of the stator 10, and the third direction D3 is the circumferential direction of the stator 10.

The housing 20 accommodates a part (end portion) of the shaft 3, the rotor 5, the first bearing 9a, the second bearing 9b, and the stator 10. The housing 20 includes a first wall portion 21, a second wall portion 22, and a side wall portion 23. The side wall portion 23 is formed in a tubular shape, and the first wall portion 21 and the second wall portion 22 are provided on the side wall portion 23 so as to close both ends of the side wall portion 23 in the first direction D1. In the present embodiment, the second wall portion 22 and the side wall portion 23 are integrally formed, and the first wall portion 21 is formed separately from the side wall portion 23 and the second wall portion 22 and is attached to and integrated with the side wall portion 23.

One end portion 13 of the stator 10 in the first direction D1 abuts against the first wall portion 21. More specifically, at the one end portion 13 of the stator 10, the coil end is covered with a resin member 15 made of, for example, a thermosetting material (as an example, Rigolac (registered trademark) BMC manufactured by Showa Denko), and the coil end abuts against the first wall portion 21 via the resin member 15 and a sealing member 17. That is, the sealing member 17 is interposed between the one end portion 13 of the stator 10 and the first wall portion 21. Thereby, the space between the one end portion 13 of the stator 10 and the first wall portion 21 is maintained at least in a liquid-tight manner.

The other end portion 14 of the stator 10 in the first direction D1 abuts against the second wall portion 22. More specifically, at the other end portion 14 of the stator 10, the coil end is covered with a resin member 16 made of, for example, a thermosetting material (as an example, Rigolac (registered trademark) BMC manufactured by Showa Denko), and the coil end abuts against the second wall portion 22 via the resin member 16 and a sealing member 17. That is, the sealing member 17 is interposed between the other end portion 14 of the stator 10 and the second wall portion 22. Thereby, the space between the other end portion 14 of the stator 10 and the second wall portion 22 is maintained at least in a liquid-tight manner.

The first bearing 9a is, for example, fitted and held in a recess provided in the first wall portion 21. The second bearing 9b is, for example, fitted and held in a recess provided in the second wall portion 22. That is, at least a part of the first bearing 9a is embedded in the first wall portion 21, and at least a part of the second bearing 9b is embedded in the second wall portion 22.

The housing 20 includes an inner space 24 and an outer space 25. The inner space 24 is formed by an inner peripheral portion 11b of the stator 10 and the first wall portion 21 and the second wall portion 22, and accommodates a part of the shaft 3 and the rotor 5. The outer space 25 is formed by an outer peripheral portion 11a of the stator 10 and the first wall portion 21 and the second wall portion 22. The outer space 25 is separated from the inner space 24 (sealed off at least in a liquid-tight manner with respect to the inner space 24) by the sealing member 17 interposed between the one end portion 13 of the stator 10 and the first wall portion 21 and between the other end portion 14 of the stator 10 and the second wall portion 22. That is, in the housing 20, the space formed between the first wall portion 21 and the second wall portion 22 is partitioned into an inner space and an outer space of the stator 10 that are sealed off from each other.

Here, the motor 1 includes a coolant flow path 30 formed in the housing 20 through which coolant (for example, liquid coolant such as oil) flows. The coolant flow path 30 includes a first region 31, a second region 32, grooves 33, a first communication passage 35, and a second communication passage 36. The first region 31 is a region on the side of the one end portion 13 of the stator 10 in the outer space 25. The second region 32 is a region on the side of the other end portion 14 of the stator 10 in the outer space 25.

A plurality of grooves 33 are formed in the outer peripheral portion 11a of the stator 10 (here, the outer surface of the stator core 11) so as to extend along the first direction D1 and communicate the first region 31 with the second region 32. That is, one end of the groove 33 in the first direction D1 communicates with the first region 31, and the other end of the groove 33 in the first direction D1 communicates with the second region 32. The grooves 33 are arranged along the circumferential direction (third direction D3) of the stator 10.

The first communication passage 35 is formed inside the first wall portion 21 so as to communicate a part of the first region 31 with another part of the first region 31 via the first bearing 9a. The part and another part of the first region 31 are, as an example, portions facing each other through the center of the annular ring when the first region 31 is formed in an annular shape as viewed from the first direction D1. A sealing member is provided from the first wall portion 21 to the first bearing 9a so that coolant flowing through the first communication passage 35 does not flow into the inner space 24 at the first bearing 9a.

The second communication passage 36 is formed inside the second wall portion 22 so as to communicate a part of the second region 32 with another part of the second region 32 via the second bearing 9b. The part and another part of the second region 32 are, as an example, portions facing each other through the center of the annular ring when the second region 32 is formed in an annular shape as viewed from the first direction D1. A sealing member is provided from the second wall portion 22 to the second bearing 9b so that coolant flowing through the second communication passage 36 does not flow into the inner space 24 at the second bearing 9b.

In the coolant flow path 30 as described above, when coolant is introduced from an inlet 7a to the first region 31, a part of the coolant flows toward the second region 32 through the grooves 33, and the remainder of the coolant flows toward the first bearing 9a through the first communication passage 35. The coolant led out to the second region 32 is discharged to the outside from an outlet 7b provided in the second region 32.

As illustrated in FIG. 2, on the outer peripheral portion 11a of the stator 10 (stator core 11), a plurality of projections 11p defining the grooves 33 are formed arranged along the circumferential direction (third direction D3) of the stator 10. The groove 33 is formed by a pair of projections 11p adjacent to each other in the circumferential direction of the stator 10. Each of the grooves 33 is closed in the radial direction (second direction D2) of the stator 10 by the top portion (top surface) of the projection 11p abutting against an inner surface 23s of the side wall portion 23 of the housing 20. Thereby, each of the grooves 33 is formed in a tubular shape extending along the first direction D1.

As described above, in the motor 1 according to the present embodiment, the housing 20 includes: the first wall portion 21 against which the one end portion 13 of the stator 10 in the first direction D1 abuts; the second wall portion 22 against which the other end portion 14 of the stator 10 in the first direction D1 abuts; the side wall portion 23 facing the outer peripheral portion 11a of the stator 10; the inner space 24 formed by the inner peripheral portion 11b of the stator 10 and the first wall portion 21 and the second wall portion 22, accommodating a part of the shaft 3 and the rotor 5; and the outer space 25 formed by the outer peripheral portion 11a of the stator 10 and the first wall portion 21 and the second wall portion 22.

The outer space 25 is separated from the inner space 24 by the sealing member 17 interposed between the one end portion 13 of the stator 10 and the first wall portion 21 and between the other end portion 14 of the stator 10 and the second wall portion 22. The coolant flow path 30 through which coolant flows includes: the first region 31 on the side of the one end portion 13 of the stator 10 in the outer space 25; the second region 32 on the side of the other end portion 14 of the stator 10 in the outer space 25; and the plurality of grooves 33 formed in the outer peripheral portion 11a of the stator 10 so as to extend along the first direction D1 and communicate the first region 31 with the second region 32.

Therefore, in the outer space 25 of the housing 20, by circulating coolant from, for example, the first region 31 to the second region 32 via the plurality of grooves 33, efficient cooling becomes possible by circulating coolant around the outer peripheral portion 11a of the stator 10. In particular, the outer space 25 through which coolant flows in the housing 20 and the inner space 24 accommodating at least a part of the rotor 5 and shaft 3 are separated by the sealing member 17 interposed between the end portions of the stator 10 and the first wall portion 21 and second wall portion 22 of the housing 20. Therefore, since coolant is prevented from being introduced into the inner space 24 and contacting rotating bodies such as the rotor 5, agitation loss of the coolant is suppressed.

In the motor 1 according to the present embodiment, each of the plurality of grooves 33 is closed in the second direction D2 by the top portion of the projection 11p formed on the outer peripheral portion 11a of the stator 10 abutting against the side wall portion 23 of the housing 20 so as to define the plurality of grooves 33. Therefore, the grooves 33 are closed and made tubular, allowing coolant to flow efficiently. In particular, since separate members for closing the grooves 33, which do not function in terms of a magnetic circuit, are unnecessary, waste in terms of mass can be suppressed.

Furthermore, in the motor 1 according to the present embodiment, the bearing rotatably supporting the shaft 3 includes the first bearing 9a embedded in the first wall portion 21 and the second bearing 9b embedded in the second wall portion 22. The coolant flow path 30 includes: the first communication passage 35 formed inside the first wall portion 21 so as to communicate a part of the first region 31 with another part of the first region 31 via the first bearing 9a; and the second communication passage 36 formed inside the second wall portion 22 so as to communicate a part of the second region 32 with another part of the second region 32 via the second bearing 9b. Therefore, it becomes possible to cool the first bearing 9a and the second bearing 9b and suppress overheating.

The above embodiment describes one form of the present invention. Therefore, the present invention is not limited to the motor 1 described above and can be arbitrarily modified.

For example, in the above embodiment, a form was described in which the grooves 33 are closed in the second direction D2 by the projections 11p of the outer peripheral portion 11a of the stator 10 abutting against the side wall portion 23. However, the grooves 33 may be formed closed (tubular) in advance, or the grooves 33 may be closed by the projections 11p abutting against members other than the side wall portion 23. Alternatively, the grooves 33 may not be closed in the second direction D2 but may be open.

Furthermore, in the above embodiment, a form was described in which the coolant flow path 30 includes the first communication passage 35 provided in the first wall portion 21 via the first bearing 9a and the second communication passage 36 provided in the second wall portion 22 via the second bearing 9b. However, the coolant flow path 30 may not have the first communication passage 35 and the second communication passage 36, or may further include another flow path that does not pass through the first bearing 9a and the second bearing 9b.

### Reference Signs List

1...motor (electric motor), 3...shaft, 5...rotor, 9a...first bearing, 9b...second bearing, 10...stator, 11a...outer peripheral portion, 11b...inner peripheral portion, 11p...projection, 13...one end portion, 14...the other end portion, 20...housing, 21...first wall portion, 22...second wall portion, 23...side wall portion, 30...coolant flow path, 31...first region, 32...second region, 33...groove, 35...first communication passage, 36...second communication passage.

## Claims

1. An electric motor comprising:
a shaft extending along a first direction;
a rotor provided on the shaft;
a stator provided to surround the rotor;
a bearing rotatably supporting the shaft;
a housing accommodating the shaft, the rotor, the stator, and the bearing; and
a coolant flow path formed in the housing and through which coolant flows,
wherein the housing includes:
a first wall portion against which one end portion of the stator in the first direction abuts;
a second wall portion against which the other end portion of the stator in the first direction abuts;
a side wall portion facing an outer peripheral portion of the stator;
an inner space formed by an inner peripheral portion of the stator and the first wall portion and the second wall portion, the inner space accommodating at least the rotor; and
an outer space formed by the outer peripheral portion of the stator and the first wall portion and the second wall portion, the outer space being separated from the inner space by a sealing member interposed between the one end portion of the stator and the first wall portion and between the other end portion of the stator and the second wall portion, and
wherein the coolant flow path includes:
a first region on a side of the one end portion of the stator in the outer space;
a second region on a side of the other end portion of the stator in the outer space; and
a plurality of grooves formed in the outer peripheral portion of the stator so as to extend along the first direction and communicate the first region with the second region.

2. The electric motor according to claim 1,
wherein each of the plurality of grooves is closed in a second direction intersecting the first direction by a top portion of a projection abutting against the side wall portion of the housing, the projection being formed on the outer peripheral portion of the stator so as to define the plurality of grooves.

3. The electric motor according to claim 1 or 2,
wherein the bearing includes:
a first bearing embedded in the first wall portion; and
a second bearing embedded in the second wall portion, and
wherein the coolant flow path includes:
a first communication passage formed inside the first wall portion so as to communicate a part of the first region with another part of the first region via the first bearing; and
a second communication passage formed inside the second wall portion so as to communicate a part of the second region with another part of the second region via the second bearing.
